# EUROPEAN PATENT SPECIFICATION

(11) **EP 4 060 647 B1**
(45) Date of publication and mention of the grant of the patent: **04.09.2024**
(21) Application number: 20887873.6
(22) Date of filing: 18.05.2020
(51) Int. Cl.: G09B 23/20, G21C 17/017, G21C 7/12, G21C 13/036

(54) **THERMAL STATE TEST DEVICE FOR CONTROL ROD DRIVE LINE, AND CENTERING METHOD FOR CONTROL ROD DRIVE LINE**
VORRICHTUNG ZUM PRÜFEN DES THERMISCHEN ZUSTANDS EINES STEUERSTABANTRIEBSSTRANGS UND VERFAHREN ZUM ZENTRIEREN EINES STEUERSTABANTRIEBSSTRANGS
DISPOSITIF DE TEST D'ÉTAT THERMIQUE POUR LIGNE DE COMMANDE DE BARRES DE CONTRÔLE, ET PROCÉDÉ DE CENTRAGE POUR LIGNE DE COMMANDE DE BARRES DE CONTRÔLE

(30) Priority: 11.11.2019 CN 201911098185
(43) Date of publication of application: 21.09.2022
(73) Proprietor: China Nuclear Power Technology Research Institute Co., Ltd, Shenzhen Guangdong 518029 (CN); China Nuclear Power Engineering Company Ltd., Shenzen, Gaungdong 518000 (CN); China General Nuclear Power Corporation, Futian District Shenzhen Guangdong 518029 (CN); CGN Power Co., Ltd., Futian District Shenzen Guangdong 518029 (CN)
(72) Inventor: SU, Qianhua, Shenzhen, Guangdong 518029 (CN); LU, Donghua, Shenzhen, Guangdong 518029 (CN); ZHANG, Ge, Shenzhen, Guangdong 518029 (CN); LYU, Lulu, Shenzhen, Guangdong 518029 (CN); FU, Xuekuan, Shenzhen, Guangdong 518029 (CN); LIU, Hongchao, Shenzhen, Guangdong 518029 (CN); LI, Yu, Shenzhen, Guangdong 518029 (CN)
(74) Representative: Mewburn Ellis LLP
(86) International application number: PCT/CN2020/090860
(87) International publication number: WO 2021/093295

(56) References cited:
- EP-A1- 0 239 372
- CN-A- 103 366 843
- CN-A- 103 400 613
- CN-A- 103 500 524
- CN-A- 103 500 524
- CN-A- 103 714 736
- CN-A- 103 714 736
- CN-A- 105 702 304
- CN-A- 106 653 116
- CN-A- 106 653 116
- CN-A- 107 221 363
- CN-A- 111 028 640

## Description

### FIELD OF THE INVENTION

The invention relates to the technical field of experimental verification of reactors, in particular to a hot test device for a control rod drive line and a centering method thereof.

### BACKGROUND OF THE INVENTION

CN103500524A discloses a cold test device and a test method for a control rod drive line in a nuclear power plant, and the test device includes a pressure cylindrical tube simulating a reactor pressure vessel, a guide tube assembly, a fuel assembly, a control rod assembly and a drive mechanism. The pressure cylindrical tube is a container composed of a top cylindrical tube, an upper cylindrical tube, a lower cylindrical tube and a bottom connecting cylindrical tube. Each cylindrical tube is detachably connected by flanges in turn. The axial length of the pressure cylindrical tube can be increased or shortened by replacing one or more tube segment of the top cylindrical tube, the upper cylindrical tube, the lower cylindrical tube and the bottom connecting cylindrical tube so as to adapt for the cold test of different fuel assemblies with different heights. However, in practice, such a device does not meet stringent operating conditions when the control rod drive mechanism works under high temperature (≥ 300°C) and high pressure (≥ 15MPa) conditions, and meanwhile the alignment and centering requirements for the upper core plate, the lower core plate, and the guide tube support plate in the test piece under the hot state working conditions are not met.

CN103714736A disclosed a cold test device for a pressurized water reactor drive line, which includes a simulated top cover assembly and a simulated barrel assembly located between the control rod drive mechanism and the guide tube assembly. The simulated top cover assembly and the simulated barrel assembly are connected to form a cavity in which a control rod guide assembly is also installed. The upper end of the control rod guide assembly is connected with the control rod drive mechanism, and the lower end of the control rod guide assembly is connected with a baffle assembly in which the simulated fuels and the control rod assembly are located, and a simulated hold-down assembly is also installed between the control rod guide assembly and the simulated barrel assembly. A simulated reactor is established in such a device to carry out the rod drop characteristics test and experimental study of the rod drop performance on the influence of different operating environmental conditions such as the eccentricity of the drive line and the flow change, thus the test results are accurate, which can be used to verify the rationality and reliability of the configurations of the drive line guide structure of the control rods. However, the disclosure is silent on a centering structure and a centering method for the device, which cannot meet the operating requirements under high temperature (^300°C) and high pressure (^ 15MPa) conditions.

In addition, the periodical published in "Nuclear Power Engineering" (Vol.36. No.4 Aug. 2015) disclosed a rod drop test system under cold state for researching on cold state rod drop characteristics of a drive line. Such a system is established to carry out the rod drop characteristics tests under cold state conditions, which is helpful to provide validation data for the development on rod drop analysis program for a control rod drive line. Localized drive line prototype components are used as test pieces, and the test body includes a set of full-size drive lines (including simulated fuel assembly, control rod assembly, lower guide tube, upper guide tube, and control rod drive mechanism) and a test cylindrical tube accommodating the set of full-size drive line. Specifically, a centering adjusting mechanism is configured at the positions of the upper core plate and the upper support plate of the test cylindrical tube, which is adapted for adjusting the displacements in two directions in the horizontal position and cooperating with a displacement measurement mechanism to realize the optical centering and alignment and misalignment recovery for the test piece during installation. However, such a system still cannot meet the operating requirements under high temperature (≥300°C) and high pressure (≥15MPa) conditions, and further there is no details on how to adjust the alignment and centering of the test piece.

CN105702304A discloses a reactor control rod drive line comprehensive performance testing and verifying device which includes a hydraulic circuit system, a falling rod testing body and a supporting steel platform, for simulating the situation in the reactor.

CN107221363B discloses a system for detecting the performance of a control rod drive mechanism of a pressurized water reactor and a test device for the system, which includes a pressure container, a control rod assembly simulator arranged in the pressure container and a buffer assembly.

CN106653116A discloses a pressure bearing vessel suitable for an out-of-pile test of a reversely inserted drive wire, which includes a pressure bearing vessel body and an eccentric tube socket component.

CN103400613A discloses a cross flow testing apparatus and method for a cold test on drive wires of nuclear power plants, which includes a cross flow limiter, a cross flow inlet connecting tube and an outlet connecting tube.

### SUMMARY OF THE INVENTION

Aspects of the present invention are set out in the appended claims.

### BRIEF DESCRIPTION OF THE DRAWINGS

FIG. 1 is a cross-sectional structural diagram of a hot test device for controlling a rod driving line according to an embodiment of the present invention.
FIG. 2 is a cross-sectional structural diagram of an upper core plate, an upper plate adjusting member and a fastening screw according to an embodiment of the present invention.
FIG. 3 is a plan view of the baffle assembly and the baffle adjusting member according to an embodiment of the present invention.

### DETAILED DESCRIPTION OF ILLUSTRATED EMBODIMENTS

In order to describe the technical content, structural features, achieved objects and effects of the present invention in detail, the following detailed description is given in conjunction with the embodiments and the accompanying drawings.

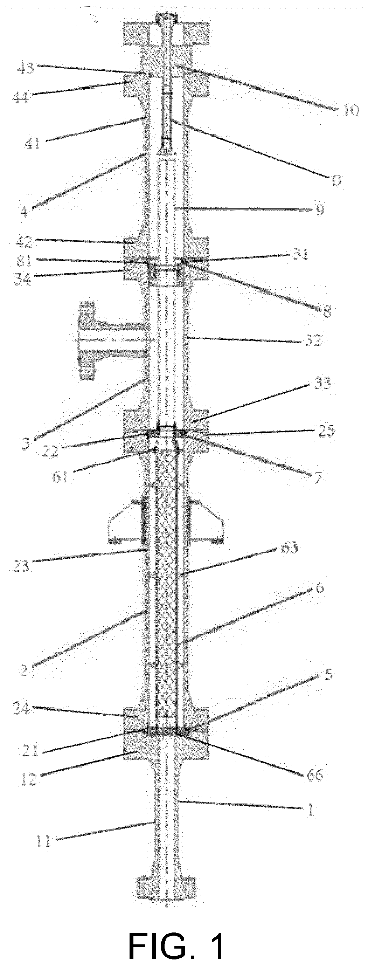

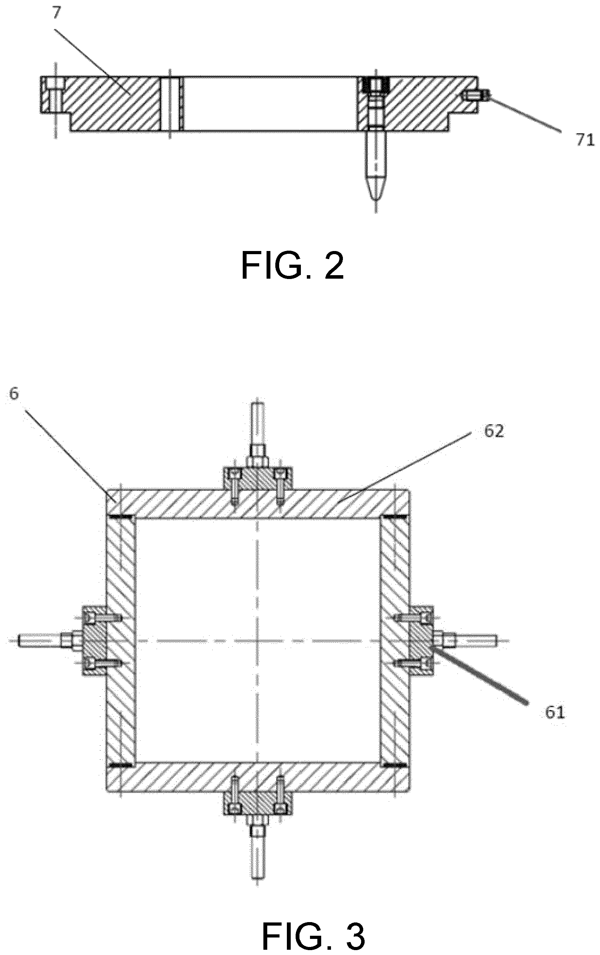

Referring to FIGS. 1-3, a hot test device for a control rod drive line of the present invention includes a bottom connecting shell 1, a lower pressure shell 2, a middle pressure shell 3, an upper pressure shell 4, a lower core plate 5, a baffle assembly 6, and an upper core plate 7, a guide tube support plate 8, a guide tube 9, a tube base installation structure 10 and a tube base 0 for installing a control rod drive mechanism. Specifically, the bottom connecting shell 1, the lower pressure shell 2, the middle pressure shell 3 and the upper pressure shell 4 are sealed and connected in sequence. A lower plate installation notch 21 and an upper plate installation notch 22 are respectively formed at two ends of the lower pressure shell 2, and the lower core plate 5 is fixed on the lower plate installation notch 21. A baffle assembly 6 is located in the lower pressure shell 2 and fixed on the lower core plate 5, and a plurality of baffle adjusting members 61 arranged in a circumferential direction are provided at a position close to a top of the baffle assembly 6; in virtue of the adjustments of the baffle adjusting members 61, and abutments between the baffle adjusting members and the inner side wall of the lower pressure shell 2, the baffle assembly 6 can be centered relative to the lower core plate 5. The upper core plate 7 is fixed at the upper plate installation notch 22, a plurality of upper plate adjusting members 71 arranged in a circumferential direction are provided at the upper core plate 7; in virtue of the adjustments to the upper plate adjusting members 71, and abutments between the upper plate adjusting members 71 and the inner side wall of the upper plate installation notch 22, the upper core plate 7 can be centered relative to the lower core plate 5. An upper end of the middle pressure shell 3 is formed with a support plate installation notch 31 on which the guide tube support plate 8 is fixed, a plurality of support plate adjusting members 81 arranged in a circumferential direction are provided at the guide tube support plate 8; in virtue of the adjustments to the support plate adjusting members 81, and abutments between the support plate adjusting members 81 and the inner side wall of the support plate installation notch 31, the guide tube support plate 8 can be centered relative to the lower core plate 5. The tube base installation structure 10 is placed on an upper end of the upper pressure shell 4.

Specifically, the lower core plate 5, the upper core plate 7 and the guide tube support plate 8 are respectively engaged with the lower plate installation notch 21, the upper plate installation notch 22 and the support plate installation notch 31 by means of fastening screws. The upper core plate 7 and the guide tube support plate 8 are required to be positioned together in a cooperative drilling manner, and the lower end of the baffle assembly 6 is fixed to the lower core plate 5 by the fastening screw loaded from the lower core plate 5. The upper portion of the guide tube 9 is located in the upper pressure shell 4, the lower portion is located in the middle pressure shell 3, and the guide tube 9 is fixed on the upper core plate 7 so that the guide tube 9 can be fixed reliably under the cooperation of the guide tube support plate 8 and the upper core plate 7.

The pressure shell of the hot test device for a control rod drive line of the present invention is a segmented configuration, with each shell segment is relatively short, therefore the flatness of mating end surfaces among the shell segments and the verticality between the body wall surfaces and the mating end surfaces are easier to be ensured, which makes the processing technology simpler, the processing accuracy and processing difficulty to be greatly reduced, and the production cost to be further reduced finally. Furthermore, based on the configurations of the baffle adjusting members 61, the upper plate adjusting component members 71 and the support plate adjusting members 81, the baffle assembly 6, the upper core plate 7 and the guide tube support plate 8 can be centered relative to the lower core plate 5 by adjusting the adjusting members 61, 71 and 81 respectively. Such a centering adjustment structure is simple, and the adjustment method is simple and reliable.

In some embodiments, the upper plate adjusting members 71, the support plate adjusting members 81 and the baffle adjusting members 61 are adjusting screws. When proceeding with the centering adjustment, it is only necessary to screw the adjusting screws in or out, thus the adjustment method is simple, convenient and reliable. In a specific embodiment, the baffle assembly 6 is enclosed in a square shape, and each side plate 62 of the baffle assembly 6 is fixed with an adjustment screw at the top, and adjacent adjustment screws are at a 90-degree angle.

In some embodiments, the bottom connecting shell 1 includes a bottom shell shroud tube 11 and a bottom shell upper flange 12 formed on an upper end of the bottom shell shroud tube 11; the lower pressure shell 2 includes a lower shell shroud tube 23, a bottom shell lower flange 24 and a bottom shell upper flange 25 formed at both ends of the lower shell shroud tube 23; the middle pressure shell 3 includes a middle shell shroud tube 32, a middle shell lower flange 33 and a middle shell upper flange 34 formed at both ends of the middle shell shroud tube 32; and the upper pressure shell 4 includes an upper shell shroud tube 41 and an upper shell lower flange 42 formed at a lower end of the upper shell shroud tube 41. Specifically, the lower shell lower flange 24 and the bottom shell upper flange 12 are positioned in a cooperative drilling manner, the middle shell lower flange 33 and the lower shell upper flange 25 are positioned in a cooperative drilling manner, the upper shell lower flange 42 and the middle shell upper flange 34 are positioned in a cooperative drilling manner, and the lower plate installation notch 21, the upper plate installation notch 22 and the support plate installation notch 31 are respectively formed on the lower shell lower flange 24, the lower shell upper flange 25 and the middle shell upper flange 34. A cooperative drilling position means that two elements are cooperated together in advance then processed by drilling and finally positioned together. Thus the flanges are positioned in cooperative drilling manners, which facilitate the alignments and centering among the shells, and further facilitate the alignment effect of a reassembly process.

In some embodiments, a metal O-ring (not shown) is respectively formed between the bottom shell upper flange 12 and the lower shell lower flange 24, between the lower shell upper flange 25 and the middle shell lower flange 33, between the middle shell upper flange 34 and the upper shell lower flange 42. In such an arrangement, the absolute parallelism between the flange surfaces can be guaranteed to ensure the straightness of the test device; and the direct contact of the flange surfaces can also be guaranteed to ensure the accuracy of the relative positions of the test pieces in the test device in the axial direction, which increases the reliability of the test data. Moreover, it is further beneficial for the test device to withstand the test requirements under high temperature and high pressure conditions.

In some embodiments, the bottom connecting shell 1, the lower pressure shell 2, the middle pressure shell 3, and the upper pressure shell 4 are stainless steel forgings. In such an arrangement, it is beneficial for the test device to withstand the test in a high temperature and high pressure conditions, so as to facilitate the overall working conditions such as hot and cold states and long-term test research. In a specific embodiment, the shroud tubes of the bottom connecting shell 1, the lower pressure shell 2, the middle pressure shell 3 and the upper pressure shell 4 and the flanges therebetween are stainless steel forgings.

In some embodiments, the baffle assembly 6 is provided with a plurality of sets of auxiliary support members 63 below the baffle adjusting member 61 along the axial direction thereof, and each set of the auxiliary support members 63 is distributed along the circumferential direction of the baffle assembly 6 and spaced with a gap relative to the inner side wall of the lower pressure shell 2. In such an arrangement, the baffle assembly 6 can be supported due to the abutment between the auxiliary support members 63 and the lower pressure shell 2, once the baffle assembly 6 is inclined.

In some embodiments, the tube base installation structure 10 is a pressure block, which is pressed and placed on the top of the upper pressure shell 4 and can be adjusted in any horizontal direction relative to the upper pressure shell 4. Specifically, the pressure block can be positioned by relying on the self-gravity and can be removed directly without using fasteners, which improves the test efficiency. Moreover, because the pressure block can be adjusted in any horizontal direction relative to the upper pressure shell 4, which is also convenient to the centering adjustment of the tube base 0. Specifically, the pressure block and the bottom connecting shell 1, the lower pressure bearing shell 2, the middle pressure shell 3 and the upper pressure shell 4 are all made of stainless steel forgings so that the test device can better withstand the high-temperature and high-pressure test environment, which is further adaptable to the experimental study for overall working conditions including hot and cold states working conditions.

As a preferred embodiment, the top end of the upper pressure shell 4 is formed with a pressure block installation notch 43 on which the pressure block is placed, and the size of the pressure block installation notch 43 is larger than that of the pressure block so that the pressure block can be adjusted in any horizontal direction relative to the upper pressure shell 4. Specifically, the upper end of the upper pressure shell 4 is formed with an upper shell upper flange 44 on which the pressure block installation notch 43 is formed.

In addition, with reference to FIGS. 1 to 3 , the present invention also provides a centering method for a control rod drive line of the hot test device as above, and the method includes the following steps:
fixing the lower core plate 5 on the lower plate installation notch 21 of the lower pressure shell 2;
placing the baffle assembly 6 into the lower pressure shell 2 and centering the baffle assembly 6 relative to the lower core plate 5 by adjusting the baffle adjusting member 61;
fixing the bottom end of the baffle assembly 6 on the lower core plate 5 through a locking member 66 (specifically, a screw);
placing the upper core plate 7 on the upper plate installation notch 22 of the lower pressure shell 2 and centering the upper core plate 7 relative to the lower core plate 5 by adjusting the upper plate adjusting member 71;
positioning the upper core plate 7 on the upper plate installation notch 22 in a cooperative drilling manner;
positioning the middle pressure shell 3 on the lower pressure shell 2 in a cooperative drilling manner;
placing the guide tube support plate 8 on the support plate installation notch 31 of the middle pressure bearing shell 3 and centering the guide tube support plate 8 relative to the lower core plate 5 by adjusting the support plate adjusting member 81;
positioning the guide tube support plate 8 on the support plate installation notch 31 in a cooperative drilling manner;
positioning the upper pressure shell 4 on the middle pressure shell 3 in a cooperative drilling manner; and
placing the tube base installation structure 10 on the upper end of the upper pressure shell 4 and centering the tube base 0 relative to the lower core plate 5 by adjusting the horizontal position of the tube base installation structure 10.

After the lower core plate 5 is fixed on the lower plate installation notch 21 of the lower pressure shell 2, the centering method for the hot test device of the control rod driving line further includes positioning the lower core plate 5 on the lower pressure shell 2 in a cooperative drilling manner, which facilitates the later reassembly.

In conclusion, the hot test device for the control rod driving line of the present invention is configured with the baffle adjusting members 61, the upper plate adjusting component members 71 and the support plate adjusting members 81, the baffle assembly 6, the upper core plate 7 and the guide tube support plate 8 can be centered relative to the lower core plate 5 by adjusting the adjusting members 61, 71 and 81 respectively. Such a centering adjustment structure is simple, and the adjustment method is simple and reliable. In addition, a metal O-ring is respectively formed between the bottom shell upper flange 12 and the lower shell lower flange 24, between the lower shell upper flange 25 and the middle shell lower flange 33, and between the middle shell upper flange 34 and the upper shell lower flange 42. In such an arrangement, the absolute parallelism between the flange surfaces can be guaranteed to ensure the straightness of the test device; and the direct contact of the flange surfaces can also be guaranteed to ensure the accuracy of the relative positions of the test pieces in the test device in the axial direction, which increases the reliability of the test data. Moreover, it is further beneficial for the test device to withstand the test requirements under high temperature and high pressure environment. Furthermore, the bottom connecting shell 1, the lower pressure shell 2, the middle pressure shell 3, and the upper pressure shell 4 are stainless steel forgings, which is further beneficial for the test device to withstand the test in a high temperature and high pressure environment. Moreover, the tube base installation structure 10 in the present invention is a pressure block which can be positioned by relying on the self-gravity and can be removed directly without using fasteners, to improve the test efficiency. Further, because the pressure block can be adjusted in any horizontal direction relative to the upper pressure shell 4, which is also convenient to the centering adjustment of the tube base 0. By this token, the centering method of the hot test device for the control rod driving line of the present application can realize simple and reliable centering operation, and the test device can be reassembled after disassembly since a cooperative drilling positioning is adopted in the related structures, which facilitates the inspection to the test device.

## Claims

1. A hot test device for a control rod drive line, comprising a bottom connecting shell (1), a lower pressure shell (2), a middle pressure shell (3), an upper pressure shell (4), a lower core plate (5), a baffle assembly (6), and an upper core plate (7), a guide tube support plate (8), a guide tube (9), a tube base installation structure (10) and a tube base (0),
**characterized in that**, the bottom connecting shell (1), the lower pressure shell (2), the middle pressure shell (3), and the upper pressure shell (4) are sealed and connected in sequence, a lower plate installation notch (21) and an upper plate installation notch (22) are respectively formed at two ends of the lower pressure shell (2), and the lower core plate (5) is fixed on the lower plate installation notch (21); a plurality of baffle adjusting members (61) arranged in a circumferential direction are provided at a position close to a top of the baffle assembly (6); in virtue of adjustments to the baffle adjusting members (61), and abutments between the baffle adjusting members (61) and an inner side wall of the lower pressure shell (2), the baffle assembly (6) is centered relative to the lower core plate (5);
the upper core plate (7) is fixed at the upper plate installation notch (22), a plurality of upper plate adjusting members (71) arranged in a circumferential direction are provided at the upper core plate (7), in virtue of adjustments to the upper plate adjusting members (71), and abutments between the upper plate adjusting members (71) and an inner side wall of the upper plate installation notch, the upper core plate (7) is centered relative to the lower core plate (5);
an upper end of the middle pressure shell (3) is formed with a support plate installation notch (31) on which the guide tube support plate (8) is fixed, a plurality of support plate adjusting members (81) arranged in a circumferential direction are provided at the guide tube support plate (8), in virtue of adjustments to the support plate adjusting members (81), and abutments between the support plate adjusting members (81) and an inner side wall of the support plate installation notch (31), the guide tube support plate (8) is centered relative to the lower core plate (5);
and the tube base installation structure (10) is placed on an upper end of the upper pressure shell (4).

2. The hot test device according to claim 1, wherein the upper plate adjusting members (71), the support plate adjusting members (81) and the baffle adjusting members (61) are adjusting screws.

3. The hot test device according to claim 1, wherein the bottom connecting shell (1) comprises a bottom shell shroud tube (11) and a bottom shell upper flange (12) formed on an upper end of the bottom shell shroud tube (11), the lower pressure shell (2) comprises a lower shell shroud tube (23), a bottom shell lower flange (24) and a bottom shell upper flange (25) formed at both ends of the lower shell shroud tube (23), the middle pressure shell (3) comprises a middle shell shroud tube (32), a middle shell lower flange (33) and a middle shell upper flange (34) formed at both ends of the middle shell shroud tube (32), the upper pressure shell (4) comprises an upper shell shroud tube (41) and an upper shell lower flange (42) formed at a lower end of the upper shell shroud tube (41), the lower shell lower flange (24) and the bottom shell upper flange (12) are positioned in a cooperative drilling manner, the middle shell lower flange (33) and the lower shell upper flange (25) are positioned in a cooperative drilling manner, the upper shell lower flange (42) and the middle shell upper flange (34) are positioned in a cooperative drilling manner, the lower plate installation notch (21), the upper plate installation notch (22) and the support plate installation notch (31) are respectively formed on the lower shell lower flange (24), the lower shell upper flange (25) and the middle shell upper flange (34).

4. The hot test device according to claim 3, wherein a metal O-ring is respectively formed between the bottom shell upper flange (12) and the lower shell lower flange (24), between the lower shell upper flange (25) and the middle shell lower flange (33), between the middle shell upper flange (34) and the upper shell lower flange (42).

5. The hot test device according to claim 1, wherein the bottom connecting shell (1), the lower pressure shell (2), the middle pressure shell (3), and the upper pressure shell (4) are stainless steel forgings.

6. The hot test device according to claim 1, wherein the baffle assembly (6) is provided with a plurality of sets of auxiliary support members (63) below the baffle adjusting members (61) along an axial direction of the baffle assembly (6), and each set of the auxiliary support members (63) is distributed along a circumferential direction of the baffle assembly (6) and spaced with a gap relative to the inner side wall of the lower pressure shell (2).

7. The hot test device according to claim 1, wherein the tube base installation structure (10) is a pressure block, which is pressed and placed on a top end of the upper pressure shell (4) and is adjustable in any horizontal direction relative to the upper pressure shell (4).

8. The hot test device according to claim 7, wherein the top end of the upper pressure shell (4) is formed with a pressure block installation notch (43) on which the pressure block is placed, and a size of the pressure block installation notch (43) is larger than that of the pressure block so that the pressure block is adjustable in any horizontal direction relative to the upper pressure shell (4).

9. The hot test device according to claim 8, wherein the upper end of the upper pressure shell (4) is formed with an upper shell upper flange (44) on which the pressure block installation notch (43) is formed.

10. A centering method of a hot test device for a control rod drive line according to any one of claims 1 to 9, comprising:
fixing the lower core plate (5) on the lower plate installation notch (21) of the lower pressure shell (2);
placing the baffle assembly (6) into the lower pressure shell (2) and centering the baffle assembly (6) relative to the lower core plate (5) by adjusting the baffle adjusting member (61);
fixing the bottom end of the baffle assembly (6) on the lower core plate (5) through a locking member (66);
placing the upper core plate (7) on the upper plate installation notch (22) of the lower pressure shell (2) and centering the upper core plate (7) relative to the lower core plate (5) by adjusting the upper plate adjusting member (71);
positioning the upper core plate (7) on the upper plate installation notch (22) in a cooperative drilling manner;
positioning the middle pressure shell (3) on the lower pressure shell (2) in a cooperative drilling manner;
placing the guide tube support plate (8) on the support plate installation notch (31) of the middle pressure bearing shell (3) and centering the guide tube support plate (8) relative to the lower core plate (5) by adjusting the support plate adjusting member (81);
positioning the guide tube support plate (8) on the support plate installation notch (31) in a cooperative drilling manner;
positioning the upper pressure shell (4) on the middle pressure shell (3) in a cooperative drilling manner; and
placing the tube base installation structure (10) on the upper end of the upper pressure shell (4) and centering the tube base (0) relative to the lower core plate (5) by adjusting a horizontal position of the tube base installation structure (10).

11. The centering method according to claim 10, after fixing the lower core plate (5) on the lower plate installation notch (21) of the lower pressure shell (2), further comprising positioning the lower core plate (5) on the lower pressure shell (2) in a cooperative drilling manner.

## Patentansprüche

1. Heißtestvorrichtung für einen Steuerstabantriebsstrang, umfassend eine Boden-Verbindungsschale (1), eine untere Druckschale (2), eine mittlere Druckschale (3), eine obere Druckschale (4), eine untere Kernplatte (5), eine Ablenkplattenanordnung (6) und eine obere Kernplatte (7), eine Führungsrohrhalteplatte (8), ein Führungsrohr (9), eine Rohrbasiseinbaustruktur (10) und eine Rohrbasis (0),
**dadurch gekennzeichnet, dass**
die Boden-Verbindungsschale (1), die untere Druckschale (2), die mittlere Druckschale (3) und die obere Druckschale (4) abgedichtet und in Reihe miteinander verbunden sind, eine untere Platteneinbauaussparung (21) und eine obere Platteneinbauaussparung (22) jeweils an zwei Enden der unteren Druckschale (2) ausgebildet sind und die untere Kernplatte (5) auf der unteren Platteneinbauaussparung (21) befestigt ist; wobei eine Vielzahl von in einer Umfangsrichtung angeordneten Ablenkplatteneinstellelementen (61) in einer Position nahe einer Oberseite der Ablenkplattenanordnung (6) bereitgestellt sind, wobei aufgrund von Einstellungen an den Ablenkplatteneinstellelementen (61) und Anschlägen zwischen den Ablenkplatteneinstellelementen (61) und einer Innenseitenwand der unteren Druckschale (2) die Ablenkplattenanordnung (6) in Bezug auf die untere Kernplatte (5) zentriert ist;
die obere Kernplatte (7) auf der oberen Platteneinbauaussparung (22) befestigt ist, wobei eine Vielzahl von in Umfangsrichtung angeordneten oberen Platteneinstellelementen (71) auf der oberen Kernplatte (7) bereitgestellt sind, wobei aufgrund von Einstellungen an den oberen Platteneinstellelementen (71) und Anschlägen zwischen den oberen Platteneinstellelementen (71) und einer Innenseitenwand der oberen Platteneinbauaussparung die obere Kernplatte (7) in Bezug auf die untere Kernplatte (5) zentriert ist;
ein oberes Ende der mittleren Druckschale (3) mit einer Halteplatteneinbauaussparung (31) ausgebildet ist, auf der die Führungsrohrhalteplatte (8) befestigt ist, eine Vielzahl von in einer Umfangsrichtung angeordneten Trägerplatteneinstellelementen (81) auf der Führungsrohrhalteplatte (8) bereitgestellt ist, wobei aufgrund von Einstellungen an den Trägerplatteneinstellelementen (81) und Anschlägen zwischen den Trägerplatteneinstellelementen (81) und einer Innenseitenwand der Trägerplatteneinbauaussparung (31) die Führungsrohrhalteplatte (8) in Bezug auf die untere Kernplatte (5) zentriert ist;
und dass die Rohrbasiseinbaustruktur (10) auf einem oberen Ende der oberen Druckschale (4) platziert ist.

2. Heißtestvorrichtung nach Anspruch 1, wobei die oberen Platteneinstellelemente (71), die Halteplatteneinstellelemente (81) und die Ablenkplatteneinstellelemente (61) Einstellschrauben sind.

3. Heißtestvorrichtung nach Anspruch 1, wobei die Boden-Verbindungsschale (1) ein Boden-Schalenabschirmrohr (11) und einen Boden-Schalenoberflansch (12) umfasst, der an einem oberen Ende des Boden-Schalenabschirmrohrs (11) ausgebildet ist, wobei die untere Druckschale (2) ein unteres Schalenabschirmrohr (23), einen Boden-Schalenunterflansch (24) und einen Boden-Schalenoberflansch (25) umfasst, die an beiden Enden des unteren Schalenabschirmrohrs (23) ausgebildet sind, wobei die mittlere Druckschale (3) ein mittleres Schalenabschirmrohr (32), einen mittleren Schalenunterflansch (33) und einen mittleren Schalenoberflansch (34) umfasst, der an beiden Enden des mittleren Schalenabschirmrohrs (32) ausgebildet ist, wobei die obere Druckschale (4) ein oberes Schalenabschirmrohr (41) und einen oberen Schalenunterflansch (42) umfasst, der an einem unteren Ende des oberen Schalenabschirmrohrs (41) ausgebildet ist, wobei der untere Schalenunterflansch (24) und der Boden-Schalenoberflansch (12) in zusammenwirkender Bohrweise angeordnet sind, wobei der mittlere Schalenunterflansch (33) und der untere Schalenoberflansch (25) in zusammenwirkender Bohrweise angeordnet sind, der obere Schalenunterflansch (42) und der mittlere Schalenunterflansch (34) in zusammenwirkender Bohrweise angeordnet sind, wobei die untere Platteneinbauaussparung (21), die obere Platteneinbauaussparung (22) und die Halteplatteneinbauaussparung (31) jeweils auf dem unteren Schalenunterflansch (24), dem unteren Schalenoberflansch (25) und dem mittleren Schalenoberflansch (34) ausgebildet sind.

4. Heißtestvorrichtung nach Anspruch 3, wobei jeweils zwischen dem Boden-Schalenoberflansch (12) und dem Boden-Schalenunterflansch (24), zwischen dem Boden-Schalenoberflansch (25) und dem mittleren Schalenunterflansch (33), zwischen dem mittleren Schalenoberflansch (34) und dem oberen Schalenunterflansch (42) ein Metall-O-Ring ausgebildet ist.

5. Heißtestvorrichtung nach Anspruch 1, wobei die Boden-Verbindungsschale (1), die untere Druckschale (2), die mittlere Druckschale (3) und die obere Druckschale (4) Edelstahl-Gesenkstücke sind.

6. Heißtestvorrichtung nach Anspruch 1, wobei die Ablenkplattenanordnung (6) mit einer Vielzahl von Sätzen von Hilfshalteelementen (63) unter den Ablenkplatteneinstellelementen (61) entlang einer Achsrichtung der Ablenkplattenanordnung (6) bereitgestellt ist und jeder Satz von Hilfshalteelementen (63) entlang einer Umfangsrichtung der Ablenkplattenanordnung (6) angeordnet und mit einem Spalt in Bezug auf die Innenseitenwand der unteren Druckschale (2) beabstandet sind.

7. Heißtestvorrichtung nach Anspruch 1, wobei die Rohrbasiseinbaustruktur (10) ein Druckblock ist, der auf ein oberes Ende der oberen Druckschale (4) gedrückt und platziert ist und in einer horizontalen Richtung in Bezug auf die obere Druckschale (4) einstellbar ist.

8. Heißtestvorrichtung nach Anspruch 7, wobei das obere Ende der oberen Druckschale (4) mit einer Druckblockeinbauaussparung (43), auf der der Druckblock platziert ist, ausgebildet ist und die Größe der Druckblockeinbauaussparung (43) größer ist als jene des Druckblocks, so dass der Druckblock in einer horizontalen Richtung in Bezug auf die obere Druckschale (4) einstellbar ist.

9. Heißtestvorrichtung nach Anspruch 8, wobei das obere Ende der oberen Druckschale (4) mit einem oberen Schalenoberflansch (44) ausgebildet ist, auf dem die Druckblockeinbauaussparung (43) ausgebildet ist.

10. Verfahren zum Zentrieren einer Heißtestvorrichtung für einen Steuerstangenantriebsstrang nach einem der Ansprüche 1 bis 9, Folgendes umfassend:
Befestigen der unteren Kernplatte (5) auf der unteren Platteneinbauaussparung (21) der unteren Druckschale (2);
Platzieren der Ablenkplattenanordnung (6) in der unteren Druckschale (2) und Zentrieren der Ablenkplattenanordnung (6) in Bezug auf die untere Kernplatte (5) durch Einstellen des Ablenkplattenelements (61);
Fixieren des unteren Endes der Ablenkplattenanordnung (6) auf der unteren Kernplatte (5) durch ein Arretierelement (66);
Platzieren der oberen Kernplatte (7) auf der oberen Platteneinbauaussparung (22) der unteren Druckschale (2) und Zentrieren der oberen Kernplatte (7) in Bezug auf die untere Kernplatte (5) durch Einstellen des oberen Platteneinstellelements (71);
Positionieren der oberen Kernplatte (7) auf der oberen Platteneinbauaussparung (22) in zusammenwirkender Bohrweise;
Positionieren der mittleren Druckschale (3) auf der unteren Druckschale (2) in zusammenwirkender Bohrweise;
Platzieren der Führungsrohrhalteplatte (8) auf der Halteplatteneinbauaussparung (31) der mittleren Druckschale (3) und Zentrieren der Führungsrohrhalteplatte (8) in Bezug auf die untere Kernplatte (5) durch Einstellen des Halteplatteneinstellelements (81);
Positionieren der Führungsrohrhalteplatte (8) auf der Halteplatteneinbauaussparung (31) in zusammenwirkender Bohrweise;
Positionieren der oberen Druckschale (4) auf der mittleren Druckschale (3) in zusammenwirkender Bohrweise; und
Platzieren der Rohrbasiseinbaustruktur (10) auf dem oberen Ende der oberen Druckschale (4) und Zentrieren der Rohrbasis (0) in Bezug auf die untere Kernplatte (5) durch Einstellen einer horizontalen Position der Rohrbasiseinbaustruktur (10).

11. Zentrierverfahren nach Anspruch 10, das nach dem Befestigen der unteren Kernplatte (5) auf der unteren Platteneinbauaussparung (21) der unteren Druckschale (2) ferner das Positionieren der unteren Kernplatte (5) auf der unteren Druckschale (2) in zusammenwirkender Bohrweise umfasst.

## Revendications

1. Dispositif de test de chaleur pour une ligne d'entraînement de tiges de commande, comprenant une coque de connexion inférieure (1), une coque de pression inférieure (2), une coque de pression intermédiaire (3), une coque de pression supérieure (4), une plaque de noyau inférieure (5), un ensemble déflecteur (6) et une plaque de noyau supérieure (7), une plaque de support de tube de guidage (8), un tube de guidage (9), une structure d'installation de base de tube 10) et une base de tube (0),
**caractérisé en ce que** la coque de connexion inférieure (1), la coque de pression inférieure (2), la coque de pression intermédiaire (3) et la coque de pression supérieure (4) sont scellées et connectées en séquence, une encoche d'installation de plaque inférieure (21) et une encoche d'installation de plaque supérieure (22) sont respectivement formées aux deux extrémités de la coque de pression inférieure (2), et la plaque de noyau inférieure (5) est fixée sur l'encoche d'installation de plaque inférieure (21) ; une pluralité d'éléments d'ajustement de déflecteur (61) agencés dans une direction circonférentielle sont prévus dans une position proche d'un sommet de l'ensemble déflecteur (6) ; en vertu d'ajustements des éléments d'ajustement de déflecteur (61), et des butées entre les éléments d'ajustement de déflecteur (61) et une paroi latérale interne de la coque de pression inférieure (2), l'ensemble déflecteur (6) est centré par rapport à la plaque de noyau inférieure (5) ;
la plaque de noyau supérieure (7) est fixée au niveau de l'encoche d'installation de plaque supérieure (22), une pluralité d'éléments d'ajustement de plaque supérieure (71) agencés dans une direction circonférentielle sont prévus au niveau de la plaque de noyau supérieure (7), en vertu d'ajustements aux éléments d'ajustement de plaque supérieure (71), et des butées entre les éléments d'ajustement de plaque supérieure (71) et une paroi latérale intérieure de l'encoche d'installation de plaque supérieure, la plaque de noyau supérieure (7) est centrée par rapport à la plaque de noyau inférieure (5) ;
une extrémité supérieure de la coque de pression intermédiaire (3) est formée avec une encoche d'installation de plaque de support (31) sur laquelle la plaque de support de tube de guidage (8) est fixée, une pluralité d'éléments d'ajustement de plaque de support (81) agencés dans une direction circonférentielle sont prévus au niveau de la plaque de support de tube de guidage (8), en vertu d'ajustements aux éléments d'ajustement de plaque de support (81), et des butées entre les éléments d'ajustement de plaque de support (81) et une paroi latérale intérieure de l'encoche d'installation de plaque de support (31), la plaque de support de tube de guidage (8) est centrée par rapport à la plaque de noyau inférieure (5) ;
et la structure d'installation de base de tube (10) est placée sur une extrémité supérieure de la coque de pression supérieure (4).

2. Dispositif de test de chaleur selon la revendication 1, dans lequel les éléments d'ajustement de plaque supérieure (71), les éléments d'ajustement de plaque de support (81) et les éléments d'ajustement de déflecteur (61) sont des vis d'ajustement.

3. Dispositif de test de chaleur selon la revendication 1, dans lequel la coque de connexion inférieure (1) comprend un tube de protection de coque inférieure (11) et une bride supérieure de coque inférieure (12) formée sur une extrémité supérieure du tube de protection de coque inférieure (11), la coque de pression inférieure (2) comprend un tube de protection de coque inférieure (23), une bride inférieure de coque inférieure (24) et une bride supérieure de coque inférieure (25) formées aux deux extrémités du tube de protection de coque inférieure (23), la coque de pression intermédiaire (3) comprend un tube de protection de coque intermédiaire (32), une bride inférieure de coque intermédiaire (33) et une bride supérieure de coque intermédiaire (34) formées aux deux extrémités du tube de protection de coque intermédiaire (32), la coque de pression supérieure (4) comprend un tube de protection de coque supérieure (41) et une bride inférieure de coque supérieure (42) formée à une extrémité inférieure du tube de protection de coque supérieure (41), la bride inférieure de coque inférieure (24) et la bride supérieure de coque inférieure (12) sont positionnées pour un forage en coopération, la bride inférieure de coque intermédiaire (33) et la bride supérieure de coque inférieure (25) sont positionnées pour un forage en coopération, la bride inférieure de coque supérieure (42) et la bride supérieure de coque intermédiaire (34) sont positionnées pour un forage en coopération, l'encoche d'installation de plaque inférieure (21), l'encoche d'installation de plaque supérieure (22) et l'encoche d'installation de plaque de support (31) sont respectivement formées sur la bride inférieure de coque inférieure (24), la bride supérieure de coque inférieure (25) et la bride supérieure de coque intermédiaire (34).

4. Dispositif de test de chaleur selon la revendication 3, dans lequel un joint torique métallique est respectivement formé entre la bride supérieure de coque inférieure (12) et la bride inférieure de coque inférieure (24), entre la bride supérieure de coque inférieure (25) et la bride inférieure de coque intermédiaire (33), entre la bride supérieure de coque intermédiaire (34) et la bride inférieure de coque supérieure (42).

5. Dispositif de test de chaleur selon la revendication 1, dans lequel la coque de connexion inférieure (1), la coque de pression inférieure (2), la coque de pression intermédiaire (3) et la coque de pression supérieure (4) sont des pièces forgées en acier inoxydable.

6. Dispositif de test de chaleur selon la revendication 1, dans lequel l'ensemble déflecteur (6) est pourvu d'une pluralité d'ensembles d'éléments de support auxiliaires (63) en dessous des éléments d'ajustement de déflecteur (61) le long d'une direction axiale de l'ensemble déflecteur (6), et chaque ensemble des éléments de support auxiliaires (63) est distribué le long d'une direction circonférentielle de l'ensemble déflecteur (6) et espacé avec un intervalle par rapport à la paroi latérale interne de la coque de pression inférieure (2).

7. Dispositif de test de chaleur selon la revendication 1, dans lequel la structure d'installation de base de tube (10) est un bloc de pression, qui est pressé et placé sur une extrémité supérieure de la coque de pression supérieure (4) et est ajustable dans toute direction horizontale par rapport à la coque de pression supérieure (4).

8. Dispositif de test de chaleur selon la revendication 7, dans lequel l'extrémité supérieure de la coque de pression supérieure (4) est formée avec une encoche d'installation de bloc de pression (43) sur laquelle le bloc de pression est placé, et une taille de l'encoche d'installation de bloc de pression (43) est plus grande que celle du bloc de pression de sorte que le bloc de pression est ajustable dans toute direction horizontale par rapport à la coque de pression supérieure (4).

9. Dispositif de test de chaleur selon la revendication 8, dans lequel l'extrémité supérieure de la coque de pression supérieure (4) est formée avec une bride supérieure de coque supérieure (44) sur laquelle l'encoche d'installation de bloc de pression (43) est formée.

10. Procédé de centrage d'un dispositif de test de chaleur pour une ligne d'entraînement de tiges de commande selon l'une quelconque des revendications 1 à 9, comprenant les étapes consistant à :
fixer la plaque de noyau inférieure (5) sur l'encoche d'installation de plaque inférieure (21) de la coque de pression inférieure (2) ;
placer l'ensemble déflecteur (6) dans la coque de pression inférieure (2) et centrer l'ensemble déflecteur (6) par rapport à la plaque de noyau inférieure (5) en ajustant l'élément d'ajustement de déflecteur (61) ;
fixer l'extrémité inférieure de l'ensemble déflecteur (6) sur la plaque de noyau inférieure (5) par l'intermédiaire d'un élément de verrouillage (66) ;
placer la plaque de noyau supérieure (7) sur l'encoche d'installation de plaque supérieure (22) de la coque de pression inférieure (2) et centrer la plaque de noyau supérieure (7) par rapport à la plaque de noyau inférieure (5) en ajustant l'élément d'ajustement de plaque supérieure (71) ;
positionner la plaque de noyau supérieure (7) sur l'encoche d'installation de plaque supérieure (22) pour un forage en coopération ;
positionner la coque de pression intermédiaire (3) sur la coque de pression inférieure (2) pour un forage en coopération ;
placer la plaque de support de tube de guidage (8) sur l'encoche d'installation de plaque de support (31) de la coque de palier de pression intermédiaire (3) et centrer la plaque de support de tube de guidage (8) par rapport à la plaque de noyau inférieure (5) en ajustant l'élément d'ajustement de plaque de support (81) ;
positionner la plaque de support de tube de guidage (8) sur l'encoche d'installation de plaque de support (31) pour un forage en coopération ;
positionner le coque de pression supérieure (4) sur la coque de pression intermédiaire (3) pour un forage en coopération ; et
placer la structure d'installation de base de tube (10) sur l'extrémité supérieure de la coque de pression supérieure (4) et centrer la base de tube (0) par rapport à la plaque de noyau inférieure (5) en ajustant une position horizontale de la structure d'installation de base de tube (10).

11. Procédé de centrage selon la revendication 10, après fixation de la plaque de noyau inférieure (5) sur l'encoche d'installation de plaque inférieure (21) de la coque de pression inférieure (2), comprenant en outre le positionnement de la plaque de noyau inférieure (5) sur la coque de pression inférieure (2) pour un forage en coopération.
